# EUROPÄISCHE PATENTSCHRIFT

(11) **EP 2 712 247 B1**
(45) Veröffentlichungstag und Bekanntmachung des Hinweises auf die Patenterteilung: **27.04.2016**
(21) Anmeldenummer: 12184950.9
(22) Anmeldetag: 19.09.2012
(51) Int. Cl.: H04W 56/00, H04B 7/185

(54) **Verfahren zur Doppler Frequenzverschiebung Korrektur in einem zellulären Funkkommunikationssystem mit einer Basisstation und einer mobilen Einheit angebracht in einem Beförderungsmittel das sich mit hoher Geschwindigkeit bewegt, insbesondere ein Flugzeug.**
Method for Doppler frequency offset correction in a cellular radio communication system with a base station and a mobile unit on board of a vehicle moving with high velocity, in particular an aircraft.
Procédé de correction de l'effet Doppler dans un système cellulaire de communication radio ayant une station de base et une unité mobile à bord d'un véhicule se déplaçant à une vitesse élevée, en particulier un avion.

(43) Veröffentlichungstag der Anmeldung: 26.03.2014
(73) Patentinhaber: Siemens Convergence Creators GmbH, 1210 Wien (AT)
(72) Erfinder: Slanina, Peter, 3441 Judenau (AT); Bublin, Mugdim, Dr., 1150 Wien (AT); Kambourov, Iavor, 1110 Wien (AT)
(74) Vertreter: Maier, Daniel Oliver

(56) Entgegenhaltungen:
- WO-A2-2006/105297
- US-A- 5 455 964
- US-A- 5 703 595
- US-A1- 2005 272 379
- US-A1- 2009 054 075

## Beschreibung

### Technisches Gebiet

Die Erfindung betrifft allgemein das Gebiet der Kommunikationstechnik. Im Speziellen bezieht sich die vorliegende Erfindung auf ein Verfahren zur Frequenzsynchronisierung in einem zellulären Funkkommunikationssystem, welches zumindest eine Basisstation und eine Mobileinheit umfasst. Die Mobileinheit ist in einem mit hoher Geschwindigkeit bewegenden Beförderungsmittel, insbesondere Flugzeug, Hochgeschwindigkeitszug, etc., angebracht. Dabei werden für eine Verbindung zwischen der Basisstation und der Mobileinheit Signale mit einer von der Basisstation definierten Frequenz übertragen und die Mobileinheit weist eine interne Eigenfrequenz auf.

### Stand der Technik

In Funkkommunikationssystemen werden Nachrichten, beispielsweise mit Sprachinformation, Bildinformation, Videoinformation, SMS (Short Message Service), MMS (Multimedia Messaging Service), oder Daten, mit Hilfe von elektromagnetischen Wellen über eine Funkschnittstelle zwischen einer sendenden und empfangenden Funkstation übertragen. Bei den Funkstationen kann es sich je nach konkreter Ausgestaltung des Funkkommunikationssystems beispielsweise um Basisstationen oder Mobileinheiten wie z.B. Funkmodem, mobile Endgeräte, etc. handeln, über welche ein Teilnehmer einen Zugang zu einem Funkkommunikationssystem erhält. Das Abstrahlen der elektromagnetischen Wellen erfolgt mit Trägerfrequenzen, die in dem für das jeweilige System vorgesehenen Frequenzband liegen.

Funkkommunikationssysteme sind oftmals als so genannte zelluläre Systeme aufgebaut - wie z.B. Funkkommunikationssysteme nach dem Global System for Mobile Communication- oder GSM-Standard, nach dem Universal Mobile Telecommunications System- oder UMTS-Standard oder nach dem Long Term Evolution- oder LTE-Standard. Außer diesen weiträumig organisierten zellularen, hierarchischen Netzen gibt es auch drahtlose lokale Netze so genannte WLANs oder Wireless Local Area Networks mit einem in der Regel räumlich deutlich stärker begrenzten Funkabdeckungsbereich. Um eine weiträumige Abdeckung für beispielsweise eine drahtlose Zugangstechnik zu Breitbandinternetdiensten zu ermöglichen, wurde ausgehend vom WLAN-Standard IEEE 802.11 der IEEE-Standard 802.16 für ein Funkkommunikationssystem - das sogenannte WiMAX oder Worldwide Interoperability for Microwave Access - entwickelt.

Heutzutage sind mobile Teilnehmerendgeräte wie z.B. Smartphones, Tablet-PCs, Laptops, etc. weit verbreitet und es besteht zunehmend der Bedarf diese Endgeräte möglichst einfach und uneingeschränkt zu nutzen. D.h. von Funkkommunikationssystemen angebotene Dienste, insbesondere Datendienste wie z.B. eine Anbindung ans Internet, etc. sollen auch in Beförderungsmitteln wie z.B. Flugzeugen, Zügen oder auf Schiffen, etc. möglichst kostengünstig verfügbar und möglichst störungsfrei nutzbar sein.

Zelluläre Funkkommunikationssysteme bestehen aus so genannten Funkzellen. Eine Funkzelle ist dabei jener Funkabdeckungsbereich einer Basisstation, innerhalb welchem sich eine Mobileinheit wie z.B. ein Funkmodem für die Nutzung von Datendiensten oder ein Teilnehmerendgerät (z.B. Smartphone, Tablet-PC, etc.) befinden muss, um mit der Basisstation kommunizieren zu können. Sollen nun Teilnehmerendgeräte in einer abgegrenzten Umgebung wie z.B. innerhalb eines Beförderungsmittels, insbesondere innerhalb eines Flugzeugs genutzt werden, so besteht z.B. die Möglichkeit, dass eine oder mehrere kleine Basisstationen innerhalb des Beförderungsmittels angeordnet werden. Durch diese Basisstationen wird eine so genannte Mikro-Funkzelle aufgebaut, über welche die Teilnehmerendgeräte im Beförderungsmittel an ein Kommunikationssystem angebunden werden. Üblicherweise sind diese Mikro-Funkzellen über einen Satelliten zu terrestrischen Funkkommunikationssystemen verbunden. Ein derartiges System, welche eine Nutzung von Diensten eines Funkkommunikationssystems über ein mobiles Teilnehmerendgeräte in einem Flugzeug ermöglicht, ist z.B. in der Schrift EP 1 764 933 B1 beschrieben. Eine Anbindung der Beförderungsmittel-internen Funkzelle an ein Funkkommunikationssystem mittels Satellitenkommunikation weist allerdings den Nachteil auf, dass beispielsweise relativ große und schwere Antennen für die Verbindung zum Satelliten eingesetzt werden müssen. Zusätzlich sind derartige Kommunikationsverbindungen mit relativ großem Aufwand und hohen Kosten verbunden. Weiterhin können schnelle mobile Internetdienste aufgrund der zur Verfügung stehenden Bandbreite nur begrenzt angeboten werden. Daher wird insbesondere für eine Verbindung von Flugzeugen zu Funkkommunikationssystemen am Boden eine einfachere und kostengünstigere Möglichkeit gesucht, über welche insbesondere auch schnelle Datenverbindungen zur Verfügung gestellt werden können.

Im Bereich der Luftfahrt werden dazu beispielsweise bereits so genannte Air-to-Ground-Netze getestet, über welche schnelle mobile Internetdienste bzw. Hochgeschwindigkeitsdatenverbindungen auch innerhalb eines Flugzeugs während eines Flugs verfügbar sind. Bei so genannten Air-to-Ground-Netzen wird über entsprechende Signalisierung eine direkte Verbindung zwischen einer Mobileinheit (z.B. Funkmodem, Teilnehmerendgeräte, etc.) im Beförderungsmittel, insbesondere Flugzeug, und einer Basisstation des Funkkommunikationssystems am Boden aufgebaut. Eine mögliche Funktechnologie für eine Realisierung eines Air-to-Ground-Netzes oder Funkkommunikationssystems ist beispielsweise Long Term Evolution oder LTE, welche als Nachfolger von Universal Mobile Telecommunication Systems oder UMTS standardisiert worden ist. Im Unterschied zu Funkkommunikationssystemen, bei welchen sowohl Basisstationen als auch Mobileinheiten am Boden sind, weisen so genannte Air-to-Ground-Netze z.B. eine wesentlich größere Funkzellengröße auf und sollen auch dann mit hoher Qualität funktionieren, wenn die Basisstationen nicht zeitlich synchronisiert sind.

Einer der größten Nachteile von Air-to-Ground-Netzen, insbesondere auf Basis von LTE, besteht allerdings darin, dass es durch eine relativ hohen Geschwindigkeit des Beförderungsmittels bzw. Flugzeugs zu einem Dopplereffekt und damit zu einer Frequenzverschiebung (mit zusätzlicher Frequenzverbreiterung) bei jenen Frequenzen kommt, welche für eine Verbindung und Signalübertragung zwischen der Basisstation und der Mobileinheit verwendet werden. Wird dieser Dopplereffekt nicht ausgeglichen bzw. keine Frequenzsynchronisierung zwischen jeweiliger Basisstation und Mobileinheit durchgeführt, so kann der Dopplereffekt zu Interferenzen und Störungen auf der Verbindung führen bzw. diese unmöglich machen. Daher ist für eine störungsfreie Verbindung zwischen einer stationären Basisstation eines Funkkommunikationssystems und einer Mobileinheit in einem Beförderungsmittel, welche sich mit einer großen Geschwindigkeit bewegt - wie z.B. einem Flugzeug oder einem Hochgeschwindigkeitszug - eine Frequenzsynchronisierung bzw. eine Kompensation des Dopplereffekts aufgrund der Geschwindigkeit notwendig. Ein Einsatz von Verfahren, bei welchen beispielsweise mit Hilfe eines Pilotsignals eine Kanalabschätzung durchgeführt wird, ist bei Funkkommunikationssystem auf Basis von LTE allerdings nicht ausreichend, um die Frequenzverschiebung abzuschätzen und eine entsprechende Synchronisation einer Frequenz eines von Mobileinheit empfangenen Signals (d.h. einer Empfangsfrequenz) mit einer Sendefrequenz an die Basisstation durchzuführen. Dabei können je nachdem die Empfangs- und Sendefrequenz in einem gleichen Frequenzband wie z.B. bei einem Time-Division-Duplex- oder TDD-Verfahren oder in verschiedenen Frequenzbändern wie z.B. bei einem Frequenz-Division-Duplex- oder FDD-Verfahren.

Wird ein Signal im so genannten Downlink von der Basisstation zur Mobileinheit im Beförderungsmittel (z.B. Flugzeug) übertragen, so kommt es aufgrund der Bewegung des Beförderungsmittels zu einer Dopplerverschiebung. Diese Dopplerverschiebung stellt sich für die Mobileinheit als Abweichung von der Frequenz des von der Basisstation übertragenen Signals dar. Üblicherweise bezieht die Mobileinheit eine Empfangsfrequenz aus der von der Basisstation vorgegebenen Frequenz, mit welcher ein Signal im Downlink übertragen wird. Für eine Übertragung von Signalen von der Mobileinheit zur Basisstation im so genannten Uplink wird von der Mobileinheit dann die mit der Dopplerverschiebung verfälschte Empfangsfrequenz für eine Sendefrequenz herangezogen und die Sendefrequenz daraus abgeleitet. Da das Uplink-Signal, welches von der Mobileinheit im Beförderungsmittel an die Basisstation gesendet wird, beim Senden nochmals eine Dopplerverschiebung erfährt, weist das von der Basisstation empfangene Signal letztendlich eine doppelte Frequenzverschiebung aufgrund des Dopplereffekts auf.

Diese Frequenzverschiebung kann gegebenenfalls so groß sein, dass dadurch von der Basisstation keine Frequenzabschätzung mehr durchgeführt werden kann. Weiterhin erhält die Basisstation mehrere Uplink-Signale (von verschiedenen Mobileinheiten z.B. aus Beförderungsmittel) zur selben Zeit, welche aufgrund der unterschiedlichen Bewegungsrichtungen der Beförderungsmittel unterschiedliche Frequenzverschiebungen aufgrund des Dopplereffekts aufweisen. Diese Signale, welche mit unterschiedlichen Frequenzverschiebungen aufgrund des Dopplereffekts in der Basisstation empfangen werden, verursachen dann Interferenzen und Störungen zwischen den jeweiligen Signalträgerfrequenzen, wodurch die jeweiligen Verbindungen erheblich gestört sein können. Es ist daher einfacher, eine Frequenzsynchronisation bzw. Kompensation des Dopplereffekts in der Mobileinheit im Beförderungsmittel vorzunehmen, da bei der Mobileinheit nur eine Frequenzverschiebung von einem Signal korrigiert werden muss.

Um eine Frequenzverschiebung aufgrund des Dopplereffekts z.B. bei einer Air-to-Ground-Verbindung abzuschätzen, kann beispielsweise eine bekannte Position der Basisstation sowie eine Richtung und Geschwindigkeit des Beförderungsmittels z.B. mit Hilfe eines Navigationssystems und/oder mittels Global Positioning System (GPS) bestimmt werden. Diese Daten können dann an die Mobileinheit im Beförderungsmittel weitergeleitet und daraus eine Frequenzverschiebung aufgrund des Dopplereffekts abgeleitet werden, welcher dann in der Mobileinheit kompensiert wird. Diese Lösung weist aber mehrere Nachteile auf. Da Daten (z.B. Richtung und Geschwindigkeit des Beförderungsmittels, Position der Basisstation) durch andere Systeme (z.B. GPS) und/oder Anwendungen zur Verfügung gestellt werden müssen, sind zusätzliche Schnittstellen und/oder Funktionen zur Abfrage dieser Daten durch die Mobileinheit notwendig. Dadurch wird die Frequenzsynchronisation zwischen Basisstation und Mobileinheit komplex und aufwendig. Es ist außerdem sehr aufwendig, im Beförderungsmittel, insbesondere Flugzeug, zusätzliche Daten- und/oder Taktleitungen zu verlegen. Im Fehlerfall können umfangreiche Zerlegungsarbeiten am Beförderungsmittel erforderlich sein. Weiterhin ist es notwendig, dass der Mobileinheit immer eine aktuelle Information über die Positionen der Basisstationen vorliegt - insbesondere bei Erweiterungen mit neuen Basisstationen, da veraltete Positionen ebenfalls keine bzw. keine genaue Abschätzung der Frequenzverschiebung ermöglichen.

Eine weitere Variante die Frequenzverschiebung aufgrund des Dopplereffekts bzw. die Sendefrequenz der Mobileinheit korrekt - d.h. synchronisiert auf die Basisstation - abzuschätzen, wird in der Schrift EP 2 490 389 A1 offenbart. In dieser Schrift wird ein Konzept beschrieben, bei welchem eine Frequenzverschiebung zwischen einer Frequenz eines empfangenen Signals und einer Frequenz eines zu übertragenden Signals annähernd bestimmt werden kann. Auf Basis eines empfangenen Signals von einer Basisstation wird in einer Mobileinheit eine Frequenz dieses Signals (Empfangsfrequenz) geschätzt. Von einer Signalquelle wie z.B. ein lokaler Oszillator in der Mobileinheit wird ein Referenzsignal mit einer Referenzfrequenz zur Verfügung gestellt. Diese Referenzfrequenz entspricht weitgehend einer internen Eigenfrequenz der Mobileinheit. Dabei wird angenommen, dass die Referenzfrequenz innerhalb einer vorgegebenen Toleranz mit der Sendefrequenz für ein an die Basisstation zu übertragendes Signal korrespondiert. Die Frequenzverschiebung wird dann anhand der geschätzten Empfangsfrequenz und der Referenzfrequenz ermittelt und für eine Korrektur der Sendefrequenz eingesetzt. Dieses Verfahren weist allerdings den Nachteil auf, dass die interne Eigenfrequenz der Mobileinheit bzw. eine ungenaue Referenzfrequenz eines internen Oszillators für eine Abschätzung der Frequenzverschiebung herangezogen wird. Bei der Abschätzung der Frequenzverschiebung gemäß der Schrift EP 2 490 389 A1 wird damit ein Frequenzfehler, welcher durch den Oszillator verursacht wird (z.B. durch Alterung, Erschütterungen, etc.), nicht berücksichtigt. Es kann damit zu einer fehlerhaften Abschätzung der Frequenzverschiebung und damit zu Störungen bei der Signalübertragung zur Basisstation kommen bzw. um die vorgegebene Toleranz einzuhalten, wird in der Schrift EP 2 490 389 A1 ein externer bzw. zusätzlicher sehr genauer Referenztaktgenerator verwendet. Dadurch kommt es aber zusätzlich zu Kosten und Aufwand, da sehr genaue Taktgeneratoren sehr teuer sind.

### Darstellung der Erfindung

Der Erfindung liegt daher die Aufgabe zugrunde, ein Verfahren zur Frequenzsynchronisierung in einem zellulären Funkkommunikationssystem anzugeben, durch welches auf einfache Weise in der Mobileinheit, welche in einem sich mit hoher Geschwindigkeit bewegenden Beförderungsmittel angebracht ist, eine Frequenzverschiebung unter Berücksichtigung eines internen Frequenzfehlers der Mobileinheit ermittelt und korrigiert wird.

Diese Aufgabe wird ein Verfahren der eingangs angeführten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem während einer Verbindung zwischen einer Basisstation und einer Mobileinheit von dieser Basisstation zu definierten Zeitpunkten eine Signallaufzeit ermittelt und ein Wert der jeweils ermittelten Signallaufzeit an die Mobileinheit übertragen wird. Von der Mobileinheit wird dann aus der jeweiligen Signallaufzeit eine Entfernung zur Basisstation für den jeweiligen Zeitpunkt abgeleitet. Dann wird von der Mobileinheit für aufeinanderfolgende Zeitpunkte eine Änderung der Entfernung zur Basisstation ermittelt und aus dieser Änderung unter Berücksichtigung einer Zeitdifferenz zwischen den aufeinanderfolgenden Zeitpunkten und einer Geschwindigkeit des Beförderungsmittels ein Korrekturwert für eine Eigenfrequenz der Mobileinheit, welche z.B. von einem internen Taktgenerator oder internem Oszillator generiert wird, bestimmt.

Der Hauptaspekt der erfindungsgemäß vorgeschlagenen Lösung besteht darin, dass für eine Frequenzsynchronisierung innerhalb des Funkkommunikationssystems ein zur Verfügung stehender Rückmeldekanal über eine Zeitverschiebung zwischen einem von der Basisstation gesendeten Signal und dem von der Mobileinheit empfangenen Signal bzw. Signallaufzeit genutzt wird. Diese Zeitverschiebung - das so genannte Timing Advance - gibt einen Zeitversatz an, um welchen von einer Mobileinheit früher gesendet werden muss, damit unter Berücksichtigung der Signallaufzeit zwischen Mobileinheit und Basisstation das Signal in einem richtigen Zeitfenster an der Basisstation ankommt. Aus dieser Zeitverschiebung bzw. den Signallaufzeiten zu zwei aufeinanderfolgenden Zeitpunkten kann von der Mobileinheit dann eine relative Bewegung des Beförderungsmittels gegenüber der Basisstation bestimmt werden. Daraus kann dann sehr einfach ein Synchronisierungs-Offset in Zeit- und Frequenzbereich berechnet und damit der Korrekturwert für die Eigenfrequenz der Mobileinheit bestimmt werden. Durch das erfindungsgemäße Verfahren kann damit auf effiziente Weise und ohne Einsatz von z.B. einem externen Signalgenerator, externen Systemen (z.B. GPS) und/oder Daten von externen Anwendungen (z.B. Datenbank mit Basisstationspositionen, etc.) ein Korrekturwert für die Eigenfrequenz ermittelt werden, mit welchem eine genaue Ausgangsfrequenz für eine Korrektur einer Frequenzverschiebung aufgrund des Dopplereffekts geschaffen wird.

In weiterer Ausgestaltung des erfindungsgemäßen Verfahrens wird von der Mobileinheit eine Frequenzverschiebung eines empfangenen Signals relativ zur mit dem Korrekturwert korrigierten Eigenfrequenz bestimmt. Aus der korrigierten Eigenfrequenz und der ermittelten Frequenzverschiebung wird dann eine Sendefrequenz für Signal an die Basisstation abgeleitet wird. Damit wird auf einfache Weise eine Sendefrequenz für das zur Basisstation zu übertragende Signal ermittelt. Diese Frequenz ist mit einer von der Basisstation vorgegebenen Frequenz - d.h. mit einer Frequenz, welche zum Senden eines Signals zur Mobileinheit im so genannten Downlink von der Basisstation vorgegeben worden ist - synchron. Bei der auf diese Weise ermittelten Sendefrequenz wird idealer Weise nicht nur eine Frequenzverschiebung aufgrund des Dopplereffekts berücksichtigt, sondern auch ein durch den internen Oszillator der Mobileinheit verursachter Frequenzfehler der Eigenfrequenz, welcher z.B. durch eine Alterung, Erschütterungen, etc. des Oszillators verursacht werden kann.

Es ist vorteilhaft, wenn für eine Ermittlung der Änderung der Entfernung zwischen zwei aufeinanderfolgenden Zeitpunkten bzw. Messzeitpunkten, zu welchen eine Entfernung zur Basisstation bestimmt wurden, ein Schätz-Filter, insbesondere ein so genanntes Kalman-Filter, verwendet wird. Durch einen Einsatz eines Schätz-Filters kann auf sehr einfache Weise ein genauerer Wert für jene Entfernung ermittelt werden, welche von einem Beförderungsmittel zwischen zwei aufeinanderfolgenden Messzeitpunkten zurückgelegt worden ist. Idealerweise wird als Messzeitpunkt nicht jeder Zeitpunkt herangezogen, an welchem eine Signallaufzeit von der Basisstation an die Mobileinheit übermittelt wird. Es ist günstiger, dabei eine Zeitdifferenz von beispielsweise 15 bis 30 Minuten zwischen den Messzeitpunkten vorzusehen, da ein Beförderungsmittel in dieser Zeitdauer beispielsweise eine Geschwindigkeitsänderung und/oder Richtungsänderung eines Beförderungsmittels deutlicher feststellbar ist. Als Schätzfilter kann insbesondere ein so genanntes Kalman-Filter eingesetzt werden. Ein Kalman-Filter ist eine rekursive Schätzfunktion, mit welcher Signal- und/oder Zeitreihenanalysen durchgeführt werden, um den Zustand eines Systems abzuschätzen und um gegebenenfalls vorliegende Messfehler und/oder -Verfälschungen zu entfernen.

Es ist auch günstig, wenn aus der Änderung der Entfernung zwischen aufeinanderfolgenden Zeitpunkten eine relative Geschwindigkeit des Beförderungsmittels zur Basisstation ermittelt wird. Durch die Ermittlung der relativen Geschwindigkeit wird auf einfache Weise auch eine Bewegungsbahn des Beförderungsmittels in Relation zu einer Position der Basisstation berücksichtigt. Das bedeutet, es fließt in eine Feststellung des Korrekturwerts der Eigenfrequenz auch ein, auf welche Weise sich eine Entfernung zur Basisstation z.B. aufgrund einer Kurvenbewegung des Beförderungsmittels sich verändert. So bleibt z.B. eine relative Entfernung zur Basisstation gleich, wenn vom Beförderungsmittel eine Kreisbewegung um die Basisstation durchgeführt wird. Um eine bessere Abschätzung der relativen Geschwindigkeit des Beförderungsmittels zu erhalten, kann der Wert der relativen Geschwindigkeit des Beförderungsmittels mit Hilfe eines Schätz-Filters, insbesondere eines so genannten Kalman-Filters, ermittelt werden.

Eine bevorzugte Weiterbildung des erfindungsgemäßen Verfahrens sieht auch vor, dass der Korrekturwert für die Eigenfrequenz der Mobileinheit aus mehreren Korrekturwerten mit Hilfe eines Schätz-Filters, insbesondere eines so genannten Kalman-Filters, bestimmt wird. Um einen verbesserten bzw. genaueren Korrekturwert für die Eigenfrequenz der Mobileinheit zu erhalten, kann auch dieser aus mehreren Korrekturwerten mittels eines Schätz-Filters, insbesondere mit Hilfe eines Kalman-Filters, bestimmt werden. Dadurch werden auf sehr einfache Weise eventuell vorhandene Messfehler und/oder Verfälschungen durch eine Ableitung aus der Signallaufzeit, der Entfernung, welche zwischen zwei Messzeitpunkten vom Beförderungsmittel zurückgelegt worden ist, und/oder der (relativen) Geschwindigkeit des Beförderungsmittels eliminiert bzw. zumindest reduziert. Es wird dadurch eine genauere Abschätzung des Korrekturwertes für die Frequenzsynchronisierung erhalten.

Idealer Weise wird für einen Verbindungsaufbau zur Basisstation durch die Mobileinheit eine Frequenz für einen Empfang von Signalen der Basisstation derart bestimmt, dass eine Anzahl vordefinierter Frequenzverschiebungen in der Mobileinheit unter zu Hilfenahme einer Bewertungsfunktion bewertet werden. Es wird dann jene Frequenzverschiebung herangezogen, welche ein optimales Bewertungsergebnis aufweist. Durch eine Frequenzverschiebung aufgrund des Dopplereffekts kann ein von der Basisstation für einen Verbindungsaufbau gesendetes Signal derart verschoben sein, dass es vom der Mobileinheit kaum oder nur sehr schlecht empfangen wird. Von der Mobileinheit werden daher vordefinierte Frequenzverschiebungen für eine Empfangsfrequenz z.B. bei einem so genannten Scan Receiver durchlaufen. Mittels einer Bewertungsfunktion wird dann in der Mobileinheit bewertet, welche Frequenzverschiebung ein optimales Bewertungsergebnis aufweist. Die entsprechende Frequenz wird dann von Mobileinheit als Start-Empfangsfrequenz für die Verbindung zwischen Mobileinheit und Basisstation sowie für eine genaue Ermittlung der Frequenzverschiebung bzw. des Korrekturwerts der Eigenfrequenz und für eine Bestimmung der Sendefrequenz herangezogen.

Zweckmäßiger Weise wird eine Korrektur der Frequenz für den Empfang von Signalen und/oder der Sendefrequenz der Mobileinheit durch eine Korrektureinheit der Mobileinheit durchgeführt. Die Mobileinheit umfasst mit der Korrektureinheit eine eigene Einheit, von welcher z.B. getrennt für ein Empfangen eines Signals von der Basisstation bzw. für ein Senden eines Signals an die Basisstation eine gezielte Frequenzkorrektur durchgeführt werden kann. Es besteht dabei die Möglichkeit, dass die Korrektureinheit zwei Einheiten aufweist, welche aus getrennten Bauelementen bestehen und jeweils in einem Empfangsteil und in einem Sendeteil der Mobileinheit angeordnet sind. Damit können sehr einfach auf Basis des Korrekturwerts der Eigenfrequenz der Mobileinheit getrennt eine Empfangsfrequenz und eine Sendefrequenz entsprechend korrigiert und an die Frequenz der Basisstation angepasst werden.

Alternativ kann es auch von Vorteil sein, wenn eine Korrektur der Frequenz für den Empfang von Signalen und/oder Sendefrequenz der Mobileinheit digital im so genannten Basisband durchgeführt wird. Bei Funkkommunikationssystemen erfolgt ein Zugriff einer Mobileinheit (z.B. Funkmodem, Teilnehmer-Endgerät, etc.) auf ein Übertragungsmedium (z.B. Funkstrecke, etc.) während einer Verbindung üblicherweise durch ein so genanntes Vielfachzugriffsverfahren oder Multiplexverfahren. Das Übertragungsmedium wird dabei z.B. im Zeitbereich, im Codebereich, im Raumbereich oder im Frequenzbereich zwischen den zugreifenden Mobileinheiten aufgeteilt. Auch Kombinationen der Multiplexverfahren sind möglich. So wird z.B. bei einem Funkkommunikationssystem nach dem GSM-Standard eine Mischung aus Zeitbereich (Time Division Multiple Access oder TDMA) und Frequenzbereich (Frequency Division Multiple Access oder FDMA) für eine Datenübertragung verwendet. Insbesondere für Systeme der vierten Generation wie z.B. Systemen nach dem Long Term Evoltion-/LTE-Standard und/oder dem Long Term Evolution-Advanced-Standard (LTE-Advanced), etc. oder bei Funkkommunikationssystem auf Basis von WiMAX das so genannte orthogonale Frequenzmultiplexverfahren (OFDM oder Orthogonal Frequency Division Multiplexing) verwendet. OFDM ist eine spezielle Implementierung eines so genannten Multicarrier-Modulationsverfahrens.

Bei der Modulation in der Nachrichtentechnik wird ein Träger bzw. eine Trägerfrequenz durch ein zu übertragendes Signal, insbesondere Nutzsignal verändert bzw. moduliert. Auf diese Weise wird eine hochfrequente Übertragung eines niederfrequenten Signals (z.B. Sprache, Daten, etc.) ermöglicht. Multicarrier-Modulations- oder Multiplexverfahren sind Methoden zur Signalübertragung, bei welchen mehrere Signale zusammengefasst bzw. gebündelt und oftmals simultan über ein Medium (z.B. Funkstrecke) übertragen werden. Insbesondere bei einem FDMA oder OFDM-Verfahren werden dann für die Signalübertragung gleichzeitig mehrere schmalbandige Signale auf mehrere Träger bzw. Trägerfrequenzen moduliert und damit ein Zugriff von mehreren Mobileinheiten ermöglicht.

Das Basisband in der Funktechnik ist üblicherweise jener Frequenzbereich, in welchem das Signal vor der Modulation und nach einer Demodulation durch einen Empfänger vorliegt. Bei einer Übertragung durch ein Funkkommunikationssystem das zu übertragende Signal im Basisband auf eine Trägerfrequenz aufmoduliert und befindet sich in einem Zwischenfrequenzbereich. Durch eine Wahl unterschiedlicher Trägerfrequenzen kann dann von verschiedenen Mobileinheiten ohne gegenseitige Störung auf das Übertragungsmedium (z.B. Funkstrecke) zugegriffen und übertragen werden. Durch eine Korrektur des Signals im Basisband wird von der Mobileinheit nur eine Basisfrequenz des von der Basisstation empfangenen Signals bzw. eine Basisfrequenz des von der Mobileinheit gesendeten Signals korrigiert. Eine zusätzliche Korrektur der Trägerfrequenz kann dabei idealer Weise entfallen, da durch eine Korrektur im Basisband die Frequenz des Signals zwischen Mobileinheit und Basisstation synchronisiert wird.

Bei einer besonders vorteilhaften Ausführung des erfindungsgemäßen Verfahrens wird in der Mobileinheit ein Anteil der Signallaufzeit kompensiert und dann von der Basisstation ein fehlender Anteil der Signallaufzeit bestimmt. Dabei wird von der Mobileinheit bereits bei einem Verbindungsaufbau ohne Mithilfe der Basisstation eine bestimmte Zeitdauer früher ein Uplink-Signal gesendet. D.h. von der Mobileinheit wird ein Anteil der Signallaufzeit, welche durch die Entfernung zur Basisstation entsteht, bereits ohne eine so genannte Timing Advance-Messung der Basisstation kompensiert. In der Basisstation wird dann mittels der so genannten Timing Advance-Messung ein fehlender Anteil, also eine Differenz zwischen einer gesamten Signallaufzeit und dem bereits von der Mobileinheit kompensierten Anteil ermittelt.

Dadurch kann das erfindungsgemäße Verfahren in vorteilhafter Weise auch bei sehr großen Funkzellen - wie sie z.B. bei Air-to-Ground-Netzen vorkommen - angewendet werden, wobei diese Funkzellen gegebenenfalls größer sind, als dies einer für den jeweils im jeweiligen Funkkommunikationssystem angewendeten Standard (z.B. LTE, WiMAX, etc.) definierten maximalen Signallaufzeit entsprechen würde. Zusätzlich kann durch eine teilweise Kompensation der Signallaufzeit in der Mobileinheit das erfindungsgemäße Verfahren auch bei einer so genannten "Closed Loop Timing Advance"-Methode eingesetzt werden, bei welcher von der Basisstation in jedem Schritt nur eine Änderung des Timing Advance bzw. der Signallaufzeit gegenüber einem vorausgegangenen Schritt signalisiert wird.

Es ist günstig, wenn als zelluläres Funkkommunikationssystem ein Funkkommunikationssystem nach dem so genannten GSM-Standard, dem so genannten GSM-R-Standard, dem so genannten Long Term Evolution oder LTE-Standard oder nach dem Worldwide Interoperability for Microwave Access- oder WiMAX-Standard verwendet wird. Funkkommunikationssysteme nach dem GSM-Standard sind immer noch weit verbreitet. Der Standard GSM-R oder Global System for Mobile Communications - Rail(way) ist ein Funkkommunikationssystem, welches auf dem GSM-Standard aufgebaut ist, aber für eine Anwendung im Bereich der Eisenbahn angepasst wurde. Ein Einsatz des erfindungsgemäßen Verfahrens in diesen Funkkommunikationssystemen ist insbesondere für einen Einsatz im Bereich von Hochgeschwindigkeitszügen sinnvoll, da bei diesen Beförderungsmitteln eine Frequenzverschiebung bzw. Dopplereffekt aufgrund der hohen Fortbewegungsgeschwindigkeit auftritt. Durch die Korrektur der Frequenzen in der Mobilstation ist auch in einem Hochgeschwindigkeitszug ein störungsfreier Empfang möglich.

Funksysteme nach dem so genannten Long Term Evolution oder LTE-Standard oder nach dem Worldwide Interoperability for Microwave Access- oder WiMAX-Standard werden beispielsweise für einen Einsatz in so genannten Air-to-Ground-Netzen verwendet, über welche schnelle Datenverbindungen zwischen einer oder mehreren Mobileinheiten in einem Flugzeug und einer Basisstation am Boden bzw. durch gebildeten Funkzelle hergestellt werden. Funkkommunikationssysteme nach diesen Standards - LTE bzw. WiMAX - basieren auf einem OFDM-Verfahren für eine Signalübertragung. Bei OFDM wird ein breites Frequenzband in eine Anzahl von Subbändern aufgeteilt, auf welchen die Daten übertragen werden. Einer Mobileinheit kann eine Teilmenge oder alle Subbänder zur Kommunikation zugewiesen werden. Die Trägerfrequenzen zur digitalen Daten- bzw. Signalübertragung sind bei OFDM orthogonal zueinander angeordnet. Dadurch wird ein Übersprechen zwischen den Signalen, die auf benachbarte Trägerfrequenzen reduziert und es können insbesondere Datendienst mit einer hohen Übertragungsrate (z.B. mobiles Internet, etc.) kostengünstig angeboten werden.

Es kann auch vorteilhaft sein, wenn als zelluläres Funksystem ein Funkkommunikationssystem nach einem so genannten Time-Division-Duplex- oder TDD-Verfahren oder ein Funkkommunikationssystem nach einem so genannten Frequency-Division-Duplex- oder FDD-Verfahren eingesetzt wird. Bei einem TDD- oder Zeitduplex-Verfahren, welches z.B. im Mobilfunk eingesetzt wird, wird für einen Sende- und einen Empfangskanal die gleiche Frequenz genutzt und die Kanäle sind dabei zeitlich voneinander getrennt. Bei einem FDD- oder Frequenzduplex-Verfahren, welche beispielsweise bei Mobilfunknetz nach dem GSM oder dem UMTS zu Einsatz kommen kann, wird eine Information für jede Richtung mit Hilfe einer anderen Trägerfrequenz übertragen. Damit kann von einem Gerät gleichzeitig gesendet und empfangen werden.

### Kurzbeschreibung der Zeichnung

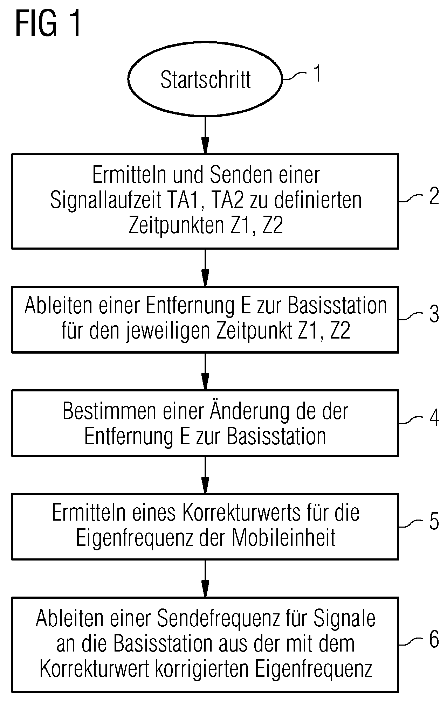

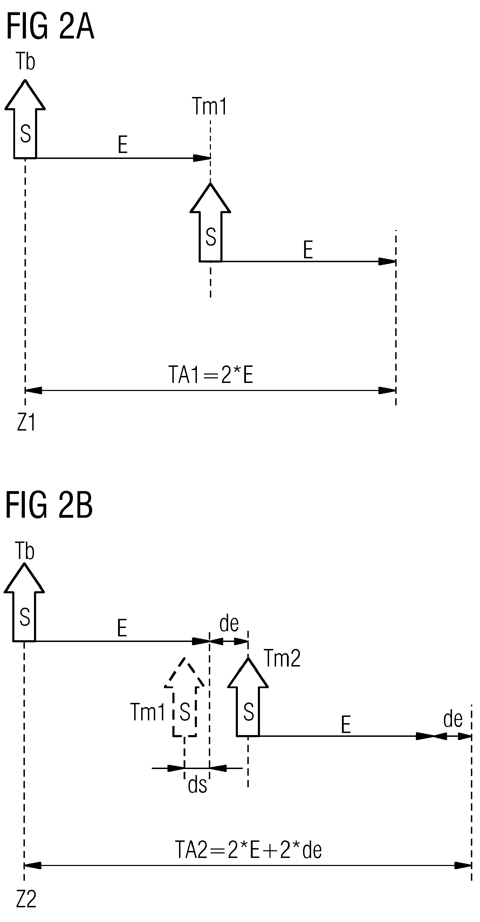

Die Erfindung wird nachfolgend in beispielhafter Weise anhand der beigefügten Figuren erläutert. Es zeigt Figur 1, einen beispielhaften Ablauf des erfindungsgemäßen Verfahrens zur Frequenzsynchronisierung zwischen einer Basisstation und einer Mobileinheit in einem zellulären Funkkommunikationssystem. Die Figuren 2a und 2b zeigen beispielhaft und schematisch einen Zusammenhang von Signallaufzeit und jeweiligem Zeitpunkt an einer Funkschnittstelle der Mobileinheit.

### Ausführung der Erfindung

Figur 1 zeigt in schematischer und beispielhafter Weise einen Ablauf des erfindungsgemäßen Verfahrens zur Frequenzsynchronisierung zwischen einer Basisstation und einer Mobileinheit wie z.B. einem Funkmodem, einem Teilnehmer-Endgerät (z.B. Smartphone, Tablet-PC, etc.) in einem zellulären Funkkommunikationssystem wie z.B. einem Mobilfunknetz auf Basis des LTE-Standards oder auf Basis von WiMAX. Es ist aber auch möglich, dass als zelluläres Funkkommunikationssystem ein Funknetz auf Basis von GSM oder GSM-R eingesetzt wird. Die Mobileinheit ist dabei in einem sich mit hoher Geschwindigkeit bewegenden Beförderungsmittel, insbesondere einem Flugzeug oder Hochgeschwindigkeitszug, angebracht. Ist die Mobileinheit in einem Flugzeug angebracht, wird das Funkkommunikationssystem auch als Air-to-Ground-Netz bezeichnet. Es besteht dabei eine direkte Verbindung zwischen der Mobileinheit im Flugzeug und der Basisstation am Boden. Bei der Verbindung zwischen der Basisstation und der Mobileinheit werden Signale auf einer von der Basisstation definierten Frequenz übertragen. Die Mobileinheit weist beispielsweise von einem internen Taktgenerator vorgegebene Eigenfrequenz auf, welche für eine Synchronisation zwischen einer Signalübertragung von der Basisstation zur Mobileinheit - dem so genannten Downlink - und einer Signalübertragung von der Mobileinheit zur Basisstation - dem so genannten Uplink - herangezogen wird.

Das erfindungsgemäße Verfahren beginnt mit einem Startschritt 1. Bei diesem Startschritt 1 kann beispielsweise ein Verbindungsaufbau zwischen Basisstation und Mobileinheit durchgeführt werden. Dabei kann beispielsweise von der Mobileinheit eine Frequenz für einen Empfang von Signalen der Basisstation derart ermittelt werden, dass eine Anzahl von vordefinierten Frequenzverschiebungen in der Mobileinheit unter zu Hilfenahme einer Bewertungsfunktion bewertet werden. Dann wird jene Frequenzverschiebung für eine Bestimmung einer Frequenz zum Empfangen von Signalen der Basisstation herangezogen, welche ein optimales Bewertungsergebnis aufweist. Das heißt, für einen Verbindungsaufbau zur Basisstation werden von der Mobilstation eine Empfangsfrequenz herangezogen und durch mögliche Frequenzverschiebungen variiert, bis ein möglichst optimaler Empfang von Signalen der Basisstation im Downlink möglich ist. Von der Mobileinheit werden dabei mögliche Empfangsfrequenzen gescannt und jene Frequenz bzw. die mit jener Frequenzverschiebung variierte Frequenz als Empfangsfrequenz für den Verbindungsaufbaus genommen, welche ein optimales Bewertungsergebnis bietet.

In einem zweiten Verfahrensschritt 2 wird dann während einer Verbindung zwischen der Basisstation und der Mobileinheit zu definierten Zeitpunkten Z1, Z2 eine Signallaufzeit TA1, TA2 für übertragene Signale S zwischen der Basisstation und der Mobileinheit ermittelt. Die Signallaufzeit TA1, TA2 wird dabei von der Basisstation beim Uplink gemessen und dann an die Mobileinheit gesendet. In einem dritten Verfahrensschritt 3 wird dann von der Mobileinheit aus der jeweiligen Signallaufzeit TA1, TA2 ein Entfernung E zur Basisstation für den jeweiligen Zeitpunkt Z1, Z2 ermittelt. Dann wird in einem vierten Verfahrensschritt 4 von der Mobileinheit für aufeinanderfolgende Zeitpunkte Z1, Z2, für welche aus der Signallaufzeit TA1, TA2 eine Entfernung E zur Basisstation bestimmt worden ist, eine Änderung de der Entfernung E zur Basisstation ermittelt.

Es besteht aber auch die Möglichkeit, dass von der Mobileinheit im zweiten Verfahrensschritt 2 ein Anteil der Signallaufzeit TA1, TA2 kompensiert wird, ohne dass von der Basisstation die Signallaufzeit TA1, TA2 mittels so genanntem Timing Advance ermittelt und an die Mobileinheit gesendet worden ist. Von der Basisstation wird dann nur eine Differenz bzw. ein fehlender Anteil der Signallaufzeit TA1, TA2 auf den bereits von der Mobileinheit kompensierten Anteil der Signallaufzeit TA1, TA2 bestimmt und an die Mobileinheit übertragen. Die Mobileinheit kann dann daraus im dritten Verfahrensschritt 3 eine Entfernung E zur Basisstation für aufeinanderfolgende Zeitpunkte Z1, Z2 ermitteln.

Eine detaillierte Erläuterung der Ermittlung der Änderung de der Entfernung E zur Basisstation wird in der Folge anhand der Figuren 2a und 2b beschrieben. Die Figuren 2a und 2b zeigen eine so genanntes Timing bzw. einen Zusammenhang zwischen Signallaufzeit TA1, TA2 Entfernung E zur Basisstation und einer Änderung de der Entfernung E aufgrund der Bewegung der Mobileinheit im Beförderungsmittel an der Funkschnittstelle der Mobileinheit. Figur 2a zeigt dabei einen ersten Zeitpunkt Z1, an welchem ein Signal S von der Basisstation an die Mobileinheit z.B. in einem Flugzeug gesendet wird. Durch einen Ausbreitung des Signals S über die Verbindung zwischen Basisstation und Mobileinheit über die Entfernung E zwischen Basisstation und Mobileinheit wird das Signal S zeitverzögert von der Mobileinheit empfangen. Die Basisstation und die Mobileinheit weisen jeweils einen zentralen Referenztakt Tb, Tm1 auf. Von der Basisstation wird dann eine Signallaufzeit TA1, welche einer doppelten Entfernung E zwischen Basisstation und Mobileinheit entspricht, gemessen und an die Mobileinheit übertragen.

In Figur 2b ist eine Situation zu einem zweiten Zeitpunkt Z2 dargestellt. Der erste und der zweite Zeitpunkt Z1, Z2 stellen aufeinanderfolgende Zeitpunkte Z1, Z2 dar und liegen beispielsweise um eine vorgegebene Zeitdauer auseinander. Während dieser Zeitdauer hat sich die Entfernung E zwischen der Basisstation und der Mobileinheit aufgrund einer Geschwindigkeit des Beförderungsmittels geändert. Die Entfernung E kann beispielsweise um eine Änderung de größer, wie in Figur 2b dargestellt, oder auch kleiner geworden sein - je nach einer Bewegungsrichtung des Beförderungsmittels. Zusätzlich führt ein Frequenzfehler ds eines internen Taktgenerators der Mobileinheit dazu, dass ein interner Referenztakt Tm1 der Mobileinheit, welcher mit der Eigenfrequenz der Mobileinheit korreliert, verschoben ist und durch die Bewegung des Beförderungsmittels auf einen neuen Referenztaktwert Tm2 verschoben wird. Das bedeutet, bei einer von der Mobileinheit gemessenen Downlink-Zeitsynchronisation wird eine Differenz zwischen dem internen Referenztaktwert Tm2 bzw. der Eigenfrequenz der Mobileinheit und einem Takt des empfangenen Signals S festgestellt. Diese Differenz wird einerseits durch den Frequenzfehler ds des internen Taktgenerators und durch eine Bewegung des Beförderungsmittels verursacht. Die von der Basisstation zum zweiten Zeitpunkt Z2 ermittelte Signallaufzeit TA2 der doppelten Entfernung E zwischen Basisstation und Mobileinheit und der doppelten Änderung de der Entfernung, welche sich durch eine Bewegung des Beförderungsmittels ergibt. Der neue Referenztaktwert Tm2 weist mit dem ursprünglichen Referenztaktwert Tm1 einen Zusammenhang über den Frequenzfehler ds und die Entfernungsänderung de auf. Von der Mobileinheit kann nun einer Differenz der Signallaufzeiten TA1, TA2, welche von der Basisstation in aufeinanderfolgenden Zeitpunkte Z1, Z2 ermittelt und an die Mobilstation übertragen wurden, im vierten Verfahrensschritt 4 eine Änderung de der Entfernung E zur Basisstation bestimmt werden.

Wie nun in Figur 1 dargestellt, kann dann in einem fünften Verfahrensschritt 5 aus der ermittelten Änderung de der Entfernung E zwischen Basisstation und Mobileinheit ein Korrekturwert für die Eigenfrequenz der Mobileinheit abgeleitet werden. Für eine Ableitung des Korrekturwerts, durch welchen der Frequenzfehler ds des internen Taktgenerators der Mobileinheit kompensiert werden kann, wird einerseits eine Zeitdifferenz zwischen den aufeinanderfolgenden Zeitpunkte Z1, Z2 berücksichtigt. Andererseits wird dazu auch eine Geschwindigkeit des Beförderungsmittels herangezogen. Für eine genauere Abschätzung des Korrekturwerts kann beispielsweise die Änderung de der Entfernung E für sehr kurz aufeinanderfolgende Zeitpunkte Z1, Z2 - z.B. bei einer periodischen Messung und Übertragung des so genannten Timing Advance - bestimmt werden. Aus diesen Änderungswerten kann dann mittels eines Schätz-Filters, insbesondere mittels eines Kalman-Filters eine Änderung de der Entfernung E für weiter auseinander liegende Zeitpunkt Z1, Z2 abgeschätzt werden.

Weiterhin besteht die Möglichkeit aus der Änderung de der Entfernung E im vierten Verfahrensschritt 4 eine relative Geschwindigkeit des Beförderungsmittels im Bezug auf die Basisstation zu ermitteln. Die relative Geschwindigkeit kann dann im fünften Verfahrensschritt 5 für die Ableitung des Korrekturwertes der Eigenfrequenz der Mobileinheit herangezogen werden. Ein Wert der relativen Geschwindigkeit kann ebenfalls mit Hilfe eines Schätz-Filters bzw. mittels eines Kalman-Filters bestimmt werden, um die Genauigkeit zu verbessern. Zusätzlich kann im fünften Verfahrensschritt 5 auch der Korrekturwert für die Eigenfrequenz der Mobileinheit für eine Steigerung der Genauigkeit aus mehreren Korrekturwerten mittels eines Schätzfilters bzw. eines Kalman-Filters bestimmt werden.

In einem sechsten Verfahrensschritt 6 kann dann die Eigenfrequenz der Mobileinheit mit dem Korrekturwert korrigiert werden bzw. der Frequenzfehler ds der Eigenfrequenz bzw. des internen Taktgenerators mit dem Korrekturwert kompensiert werden. Mit der korrigierten Eigenfrequenz kann dann eine Frequenzverschiebung, welche durch die Bewegung des Beförderungsmittels bewirkt wird, aus einer Frequenz des von der Basisstation empfangenen Signals S bestimmt werden. Dann wird aus der korrigierten Eigenfrequenz und der Frequenzverschiebung eine Sendefrequenz abgeleitet, mit welcher Signale von der Mobileinheit zur Basisstation im Uplink übertragen werden. Diese Signale werden dann von der Basisstation ohne eine Frequenzverschiebung aufgrund der Bewegung des Beförderungsmittels und ohne Verschiebung aufgrund des Frequenzfehlers ds des internen Taktgenerators der Mobileinheit empfangen.

Für eine Ableitung des Korrekturwerts der Eigenfrequenz und/oder für eine daraus folgende Korrektur der Frequenz zum Empfangen von Signalen S von der Basisstation bzw. der Sendefrequenz im sechsten Verfahrensschritt 6 kann in der Mobileinheit eine Korrektureinheit vorgesehen werden. Die Korrektur der Frequenz zum Empfangen von Signalen S von der Basisstation und/oder der Sendefrequenz kann beispielsweise digital im so genannten Basisband durchgeführt werden.

## Patentansprüche

1. Verfahren zur Frequenzsynchronisierung in einem zellulären Funkkommunikationssystem mit zumindest einer Basisstation und einer Mobileinheit, welche in einem sich mit hoher Geschwindigkeit bewegenden Beförderungsmittel, insbesondere Flugzeug, angebracht ist, wobei für eine Verbindung zwischen der Basisstation und der Mobileinheit Signale (S) mit einer von der Basisstation definierten Frequenz übertragen werden, und wobei die Mobileinheit eine interne Eigenfrequenz aufweist, **dadurch gekennzeichnet, dass** während der Verbindung von der Basisstation zu definierten Zeitpunkten (Z1, Z2) eine Signallaufzeit (TA1, TA2) zwischen Basisstation und Mobileinheit ermittelt und an die Mobileinheit gesendet wird (2), dass von der Mobileinheit aus der jeweiligen Signallaufzeit (TA1, TA2) eine Entfernung (E) zur Basisstation für einen jeweiligen Zeitpunkt (Z1, Z2) abgeleitet wird (3), dass dann von der Mobileinheit für aufeinanderfolgende Zeitpunkte (Z1, Z2) eine Änderung (de) der Entfernung (E) zur Basisstation bestimmt wird (4),
dass dann aus der Änderung (de) der Entfernung (E) zur Basisstation unter Berücksichtigung einer Zeitdifferenz zwischen den aufeinanderfolgenden Zeitpunkten (Z1, Z2) und einer Geschwindigkeit des Beförderungsmittels ein Korrekturwert für die Eigenfrequenz der Mobileinheit ermittelt wird (5).

2. Verfahren nach Anspruch 1, **dadurch gekennzeichnet, dass** von der Mobileinheit eine Frequenzverschiebung eines empfangenen Signals (S) relativ zur mit dem Korrekturwert korrigierten Eigenfrequenz bestimmt wird, und dass dann aus der korrigierten Eigenfrequenz und der ermittelten Frequenzverschiebung eine Sendefrequenz für Signale an die Basisstation abgeleitet wird (6).

3. Verfahren nach einem der Ansprüche 1 bis 2, **dadurch gekennzeichnet, dass** für eine Ermittlung der Änderung (de) der Entfernung (E) zwischen zwei aufeinanderfolgenden Zeitpunkten (Z1, Z2) ein Schätz-Filter, insbesondere ein so genanntes Kalman-Filter, verwendet wird (4).

4. Verfahren nach einem der Ansprüche 1 bis 3, **dadurch gekennzeichnet, dass** aus der Änderung der Entfernung (E) zwischen aufeinanderfolgenden Zeitpunkten (Z1, Z2) eine relative Geschwindigkeit des Beförderungsmittels zur Basisstation ermittelt wird (4).

5. Verfahren nach Anspruch 4, **dadurch gekennzeichnet, dass** ein Wert der relativen Geschwindigkeit des Beförderungsmittels mit Hilfe eines Schätz-Filters, insbesondere eines so genannten Kalman-Filters, ermittelt wird (4).

6. Verfahren nach einem der Ansprüche 1 bis 5, **dadurch gekennzeichnet, dass** der Korrekturwert für die Eigenfrequenz der Mobileinheit aus mehreren Korrekturwerten mit Hilfe eines Schätz-Filters, insbesondere eines so genannten Kalman-Filters, bestimmt wird (5).

7. Verfahren nach einem der Ansprüche 1 bis 6, **dadurch gekennzeichnet, dass** für einen Verbindungsaufbau zur Basisstation durch die Mobileinheit eine Frequenz für einen Empfang von Signalen (S) der Basisstation derart bestimmt wird, dass eine Anzahl vordefinierter Frequenzverschiebungen in der Mobileinheit unter zu Hilfenahme einer Bewertungsfunktion bewertet werden, und dann jene Frequenzverschiebung herangezogen wird, welche ein optimales Bewertungsergebnis aufweist (1).

8. Verfahren nach einem der Ansprüche 1 bis 7, **dadurch gekennzeichnet, dass** eine Korrektur der Frequenz für den Empfang von Signalen (S) und/oder der Sendefrequenz der Mobileinheit durch eine Korrektureinheit der Mobileinheit durchgeführt wird (6).

9. Verfahren nach einem der Ansprüche 1 bis 7, **dadurch gekennzeichnet, dass** eine Korrektur der Frequenz für den Empfang von Signalen (S) und/oder Sendefrequenz der Mobileinheit digital im so genannten Basisband durchgeführt wird (6).

10. Verfahren nach einem der Ansprüche 1 bis 10, **dadurch gekennzeichnet, dass** in der Mobileinheit ein Anteil der Signallaufzeit kompensiert wird, und dass dann von der Basisstation ein fehlender Anteil der Signallaufzeit bestimmt wird (2).

11. Verfahren nach einem der Ansprüche 1 bis 10, **dadurch gekennzeichnet, dass** als zelluläres Funkkommunikationssystem ein Funkkommunikationssystem nach dem so genannten GSM-Standard, dem so genannten GSM-R-Standard, dem so genannten Long Term Evolution oder LTE-Standard oder nach dem Worldwide Interoperability for Microwave Access- oder WiMAX-Standard verwendet wird.

12. Verfahren nach einem der Ansprüche 1 bis 10, **dadurch gekennzeichnet, dass** als zelluläres Funkkommunikationssystem ein Funkkommunikationssystem nach einem so genannten Time-Division-Duplex-Verfahren oder ein Funkkommunikationssystem nach einem so genannten Frequency-Division-Duplex-Verfahren eingesetzt wird.

## Claims

1. Method for frequency synchronisation in a cellular radio communication system with at least one base station and a mobile unit, which is accommodated in a means of transport, in particular airplane, which moves at high speed, wherein for a connection between the base station and the mobile unit, signals (S) are transmitted at a frequency defined by the base station and wherein the mobile unit has an internal natural frequency, **characterised in that** a signal runtime (TA1, TA2) between the base station and the mobile unit is determined and sent (2) to the mobile unit during the connection from the base station at defined points in time (Z1, Z2), that a distance (E) from the base station is derived (3) by the mobile unit from the respective signal runtime (TA1, TA2) for a respective point in time (Z1, Z2), that a change (de) in the distance (E) from the base station is determined (4) by the mobile unit for consecutive points in time (Z1, Z2), that a correction value for the natural frequency of the mobile unit is determined (5) from the change (de) in the distance (E) from the base station by taking a time difference between the consecutive points in time (Z1, Z2) and a speed of the means of transport into account.

2. Method according to claim 1, **characterised in that** a frequency offset of a received signal (S) relative to the natural frequency corrected with the correction value is determined by the mobile unit and that a transmit frequency for signals to the base station is then derived (6) from the corrected natural frequency and the determined frequency offset.

3. Method according to one of claims 1 to 2, **characterised in that** a prediction filter, in particular a so-called Kalman filter, is used (4) to determine the change (de) in the distance (E) between two consecutive points in time (Z1, Z2).

4. Method according to one of claims 1 to 3, **characterised in that** a relative speed of the means of transport to the base station is determined (4) from the change in the distance (E) between consecutive points in time (Z1, Z2).

5. Method according to claim 4, **characterised in that** a value of the relative speed of the means of transport is determined (4) with the aid of a prediction filter, in particular a so-called Kalman filter.

6. Method according to one of claims 1 to 5, **characterised in that** the correction value for the natural frequency of the mobile unit is determined (5) from a number of correction values with the aid of a prediction filter, in particular a so-called Kalman filter.

7. Method according to one of claims 1 to 6, **characterised in that** a frequency for a reception of signals (S) of the base station is determined for a connection setup to the base station by the mobile unit such that a number of predefined frequency offsets in the mobile unit is evaluated by using an evaluation function and the frequency offset which has an optimal evaluation result is then used (1).

8. Method according to one of claims 1 to 7, **characterised in that** a correction of the frequency for the reception of signals (S) and/or the transmit frequency of the mobile unit is performed (6) by a correction unit of the mobile unit.

9. Method according to one of claims 1 to 7, **characterised in that** a correction of the frequency for the reception of signals (S) and/or transmit frequency of the mobile unit is performed (6) digitally in the so-called base band.

10. Method according to one of claims 1 to 9, **characterised in that** a portion of the signal runtime is compensated in the mobile unit and that a missing portion of the signal runtime is then determined (2) by the base station.

11. Method according to one of claims 1 to 10, **characterised in that** a radio communication system according to the so-called GSM standard, the so-called GSM-R standard, the so-called Long Term Evolution or LTE standard or according to the Worldwide Interoperability for Microwave Access or WiMAX standard is used as a cellular radio communication system.

12. Method according to one of claims 1 to 10, **characterised in that** a radio communication system according to a so-called time-division duplexing method or a radio communication system according to a so-called frequency-division duplexing method is used as a cellular radio communication system.

## Revendications

1. Procédé de synchronisation de fréquences dans un système cellulaire de radiocommunication comportant au moins une station de base et une unité mobile qui est montée dans un moyen de transport qui se déplace à grande vitesse, en particulier un avion, des signaux (S) étant transmis avec une fréquence définie par la station de base pour une liaison entre la station de base et l'unité mobile, et l'unité mobile présentant une fréquence propre interne, **caractérisé en ce que**, pendant la liaison, la station de base détermine un temps de propagation de signaux (TA1, TA2) entre la station de base et l'unité mobile à des instants définis (Z1, Z2) et l'envoie (2) à l'unité mobile, **en ce que** l'unité mobile déduit (3) du temps de propagation de signaux respectif (TA1, TA2) un éloignement (E) par rapport à la station de base pour un instant respectif (Z1, Z2), **en ce que** l'unité mobile détermine (4) ensuite, pour des instants successifs (Z1, Z2), une modification (de) de l'éloignement (E) par rapport à la station de base, et **en ce qu'**une valeur de correction de la fréquence propre de l'unité mobile est ensuite déterminée (5) à partir de la modification (de) de l'éloignement (E) par rapport à la station de base compte tenu d'une différence de temps entre les instants successifs (Z1, Z2) et d'une vitesse du moyen de transport.

2. Procédé selon la revendication 1, **caractérisé en ce que** l'unité mobile détermine un décalage de fréquence d'un signal reçu (S) relativement à la fréquence propre corrigée par la valeur de correction et **en ce qu'**une fréquence d'envoi de signaux à la station de base est ensuite déduite (6) de la fréquence propre corrigée et du décalage de fréquence tel que déterminé.

3. Procédé selon l'une des revendications 1 à 2, **caractérisé en ce qu'**est utilisé (4), pour une détermination de la modification (de) de l'éloignement (E) entre deux instants successifs (Z1, Z2), un filtre d'estimation, et plus particulièrement un filtre dit de Kalman.

4. Procédé selon l'une des revendications 1 à 3, **caractérisé en ce qu'**est déterminée (4), à partir de la modification de l'éloignement (E) entre des instants successifs (Z1, Z2), une vitesse relative du moyen de transport par rapport à la station de base.

5. Procédé selon la revendication 4, **caractérisé en ce qu'**une valeur de la vitesse relative du moyen de transport est déterminée (4) à l'aide d'un filtre d'estimation, et plus particulièrement d'un filtre dit de Kalman.

6. Procédé selon l'une des revendications 1 à 5, **caractérisé en ce que** la valeur de correction de la fréquence propre de l'unité mobile est déterminée (5) à partir de plusieurs valeurs de correction à l'aide d'un filtre d'estimation, et plus particulièrement d'un filtre dit de Kalman.

7. Procédé selon l'une des revendications 1 à 6, **caractérisé en ce que**, pour un établissement de liaison vers la station de base, l'unité mobile détermine une fréquence pour une réception de signaux (S) de la station de base de manière telle qu'un nombre de décalages de fréquence prédéterminés sont évalués dans l'unité mobile à l'aide d'une fonction d'évaluation et qu'est ensuite pris en considération le décalage de fréquence qui présente (1) un résultat d'évaluation optimal.

8. Procédé selon l'une des revendications 1 à 7, **caractérisé en ce qu'**une correction de la fréquence pour la réception de signaux (S) et/ou de la fréquence d'émission de l'unité mobile est effectuée (6) par une unité de correction de l'unité mobile.

9. Procédé selon l'une des revendications 1 à 7, **caractérisé en ce qu'**une correction de la fréquence pour la réception de signaux (S) et/ou de la fréquence d'émission de l'unité mobile est effectuée (6) numériquement dans la bande dite de base.

10. Procédé selon l'une des revendications 1 à 9, **caractérisé en ce qu'**une partie du temps de propagation de signaux est compensée dans l'unité mobile et **en ce qu'**une partie manquante du temps de propagation des signaux est ensuite déterminée (2) par la station de base.

11. Procédé selon l'une des revendications 1 à 10, **caractérisé en ce qu'**est utilisé, en tant que système de radiocommunication cellulaire, un système de radiocommunication selon la norme dite GMS, la norme dite GSM-R, la norme dite Long Term Evolution ou LTE ou la norme Worldwide Interoperability for Microwave Access ou WiMAX.

12. Procédé selon l'une des revendications 1 à 10, **caractérisé en ce qu'**est utilisé, en tant que système de radiocommunication cellulaire, un système de radiocommunication selon un procédé dit de duplexage par division dans le temps ou un système de radiocommunication selon un procédé dit de duplexage par division de fréquence.
